(19) Europäisches Patentamt / European Patent Office / Office européen des brevets

(11) **EP 2 186 252 B1**

(12) **FASCICULE DE BREVET EUROPEEN**

(45) Date de publication et mention
de la délivrance du brevet:
**20.06.2012 Bulletin 2012/25**

(21) Numéro de dépôt: **08803283.4**

(22) Date de dépôt: **27.08.2008**

(51) Int Cl.:
**H04L 9/08** *(2006.01)*

(86) Numéro de dépôt international:
**PCT/EP2008/061257**

(87) Numéro de publication internationale:
**WO 2009/027447 (05.03.2009 Gazette 2009/10)**

(54) **PROCEDE DE DISTRIBUTION DE CLES CRYPTOGRAPHIQUES DANS UN RESEAU DE COMMUNICATION**

VERFAHREN ZUR VERTEILUNG KRYPTOGRAFISCHER SCHLÜSSEL IN EINEM KOMMUNIKATIONSNETZ

METHOD FOR DISTRIBUTING CRYPTOGRAPHIC KEYS IN A COMMUNICATION NETWORK

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **31.08.2007 FR 0706126**

(43) Date de publication de la demande:
**19.05.2010 Bulletin 2010/20**

(73) Titulaire: **THALES**
**92200 Neuilly-sur-Seine (FR)**

(72) Inventeur: **GRALL, Eric**
**F-44230 Saint Sébastien Sur Loire (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-2006/071239**

• **PARREIN B ET AL: "MULTIMEDIA FORWARD ERROR CORRECTING CODES FOR WIRELESS LAN//CODES POUR CORRECTION DIRECTE D'ERREURS DANS LES RESEAUX LOCAUX MULTIMEDIAS SANS FIL" ANNALES DES TELECOMMUNICATIONS - ANNALS OF TELECOMMUNICATIONS, GET LAVOISIER, PARIS, FR, vol. 58, no. 3/04, 1 mars 2003 (2003-03-01), pages 448-463, XP001170095 ISSN: 0003-4347**
• **PARREIN B ET AL: "Multiple description coding using exact discrete Radon transform" PROCEEDINGS DCC 2001. DATA COMPRESSION CONFERENCE IEEE COMPUT. SOC LOS ALAMITOS, CA, USA, 2001, page 508, XP002479414 ISBN: 0-7695-1031-0 cité dans la demande**

**Description**

La présente invention concerne un protocole de négociation distribué de clés cryptographiques. Elle s'applique, notamment, dans la sécurité des échanges entre les entités d'un réseau de communication. Ce réseau peut être un réseau fixe fortement redondant, c'est-à-dire qu'il comporte plusieurs chemins de routage ou encore un réseau ad hoc. Les réseaux ad hoc sont formés via l'auto-configuration des tables de routage de chacun des noeuds communicants faisant partie intégrante du réseau.

Dans un réseau fixe, le problème de la sécurité est généralement résolu via des systèmes d'infrastructures de gestion des clés désignées sous l'abréviation IGC, permettant le partage d'une clé ou d'un certificat entre les entités du réseau communicant. Cette généralisation n'est pas toujours souhaitable vu la complexité de mise en oeuvre d'une telle infrastructure. Dans ce contexte, la sécurisation d'un canal entre deux utilisateurs doit pouvoir faire face à un nombre important d'attaques sans l'aide externe d'une IGC.

Dans un réseau Ad hoc, le problème est d'autant plus important que la notion d'infrastructures de clés est pratiquement inexistante du fait même de la mobilité et de la volatilité de la topologie ad hoc. En effet, un réseau ad hoc est un réseau dans lequel le routage des informations est effectué par les noeuds composant le réseau. Il n'existe pas d'infrastructures fixes de routage permettant la connaissance de la topologie globale du réseau. Chacun des noeuds du réseau se comporte comme un routeur avec ses voisins. Dans ce cadre, les problèmes techniques à résoudre sont de plusieurs ordres : chacun des noeuds doit pouvoir à un instant donné connaître une partie de la topologie du réseau afin de pouvoir communiquer avec un noeud destinataire. Ce problème est résolu en partie, par des protocoles dit proactifs qui établissent les routes à l'avance grâce à une gestion périodique des tables de routage et les protocoles réactifs qui recherchent les routes à la demande, dans ce dernier cas, le noeud source et/ou les noeuds destinataires sont équipés de tables et de protocole de routage permettant de déterminer les chemins à emprunter par un message. La confiance dans le réseau est un des problèmes majeurs dans le cadre des réseaux ad hoc. En effet, les informations de routage et les informations utilisateurs circulent via des noeuds de communications privés, donc avec un niveau de confiance nul. Le réseau Ad hoc étant par nature mobile, aucun système de confiance, ou infrastructure de clés publiques, ne peut être réalisé dans ce contexte. En effet, la validation doit être effectuée par le système de confiance.

L'art antérieur, connu du Demandeur, concerne le protocole d'échange de clés via Internet plus connu sous l'abréviation anglo-saxonne IKE pour Internet Exchange Key, qui permet le calcul d'un secret commun afin de sécuriser l'échange entre deux entités. Ce protocole est décrit dans le document RFC 2409 de l'IETF disponible à l'adresse internet suivante http://www: ietf.org/rfc/rfc2409.txt. Bien qu'il soit efficace, ce protocole présente les inconvénients suivants :

- La longueur des échanges entre les deux partenaires occasionne une surchage dans la bande passante du réseau,
- Il ne permet la vérification du secret qu'à partir d'une clé ou d'un certificat pré-partagé via un moyen organisationnel hors communication,
- Ce protocole n'est pas adapté à une gestion du réseau ad hoc et il est donc vulnérable à une attaque qui consiste à ce qu'une personne malveillante se fasse passer pour le pair de chacun des deux utilisateurs de la communication, en générant un secret en lieu et place des utilisateurs finaux, plus connue sous l'abréviation MIM (en anglo-saxon Men In the Middle).

Dans le cadre d'un réseau ad hoc, il est aussi connu de mettre en oeuvre des protocoles basés sur la certification d'anneau de noeuds communicants, ainsi que la décomposition de la clé privée par une opération mathématique polynomiale. De même, l'un des inconvénients des certifications de groupe par anneau est la capacité MIM précitée au niveau de l'anneau.

De manière plus générale, l'état de l'art précité permet de partager un secret commun entre deux entités d'un réseau fixe, via une simple liaison de routage. Par contre, ce secret est validé par le chiffrement et la vérification dudit secret par une clé pré-partagée ou par un certificat fourni par une infrastructure de gestion de clés (IGC ou infrastructure de clé publique PKI). Dans le contexte des réseaux centralisés, la confiance entre les acteurs est mise en oeuvre via des certificats ou des signatures, déployés à partir d'infrastructures de gestion à clés publiques (IGC). Ce mécanisme permet à une autorité dite de certification, de valider la confiance des informations entre les divers utilisateurs certifiés. La confiance est donc localisée au niveau d'une seule entité, regroupant les fonctionnalités de certification, de validation et de révocation des utilisateurs ou d'équipements regroupés au sein d'un groupe déterminé détenant les certificats valides.

Cette stratégie de sécurité dans un réseau fonctionnant avec le protocole Internet ou IP est donc basée sur la centralisation de la confiance en un noeud unique du réseau, et d'une diffusion de cette confiance sous la forme de certificats par des méthodes administratives (cartes à puce, clé USB,...). En dehors de ce cadre, il existe plusieurs mécanismes cryptographiques permettant de partager un secret commun, via un procédé à divulgation nulle.

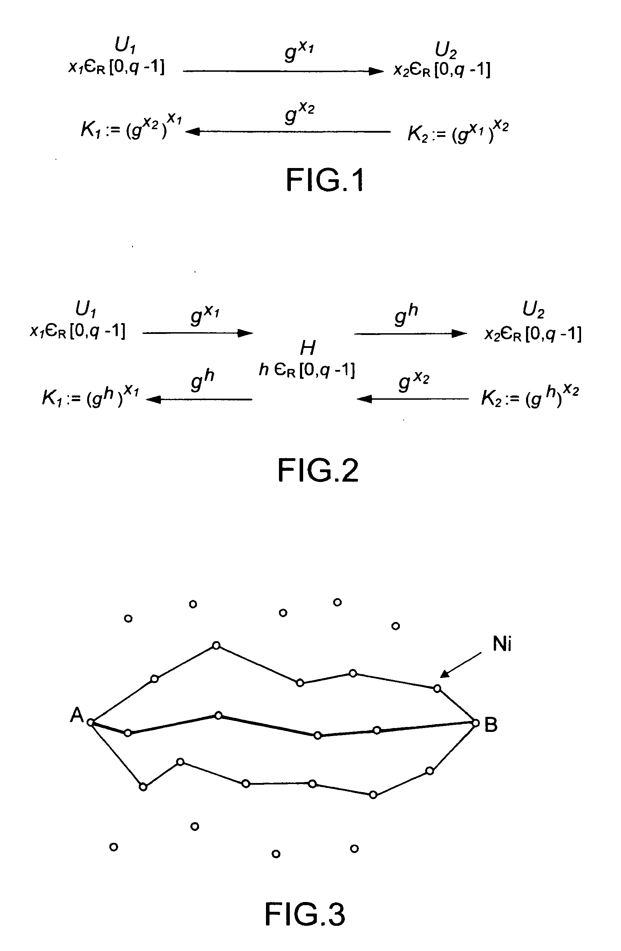

Un de ces principes ou mécanismes est le protocole Diffie-Hellman, noté DH dans la description, mis en oeuvre dans le protocole IKE précité et dans le procédé décrit dans la demande de brevet international WO 2006/071239. Ce principe, qui sera rappelé dans le paragraphe suivant, présente comme principal défaut MIM. Le protocole Diffie Hellman est rappelé à la figure 1. Les concepts théoriques de la cryptographie à clé publique remontent à l'article publié par Diffie et Hellman en 1976 (W.Diffie-M.E.Hellman : New Directions in cryptography. IEEE Trans. on Information Theory, Vol.IT-22-6, November 1976). Le principal résultat de cet article fondateur est la possibilité pour deux utilisateurs communiquant via un réseau peu sûr, de se mettre d'accord sur une clé de session, destinée à chiffrer leurs communications ultérieures.

Soit $G=<g>$ un groupe cyclique. Les deux participants $U_1$, $U_2$ choisissent chacun au hasard $x_1$, $x_2$ appartenant au groupe cyclique $G$ respectivement et échangent les valeurs $g^{x1}$, $g^{x2}$ sur le réseau. L'utilisateur $U_1$, (respectivement $U_2$) calcule alors le secret Diffie-Hellman $g^{x1x2}$ en recevant le message de $U_2$ (respectivement $U_1$). Cette hypothèse stipule qu'étant données trois valeurs $g^{x1}$, $g^{x2}$, $g^r$, un adversaire polynomial ne peut décider avec un avantage significatif si $g^r = g^{x1x2}$ ou non.

L'attaque connue du MIM est présentée sur la figure 2. Un ou plusieurs utilisateurs malveillants $H$ s'interposent entre les deux participants $U_1$, $U_2$, et vont se charger de relayer les informations de l'un vers l'autre. La figure 2 représente le cas où il n'y a qu'un tiers malveillant. Lorsque $U_1$ échange sa valeur $g^{x1}$ sur le réseau en destination de $U_2$, l'attaquant $H$ va se faire passer pour $U_2$ et répondre à sa place via un secret $g^h$. Il fera de même pour le participant $U_2$. Dans ce cadre, les deux participants communiqueront par un canal pseudo-confidentiel via l'attaquant $H$ avec les secrets communs, entre $U_1$ et $H$ : $g^{x1.h}$ et entre $U_2$ et $H$ : $g^{x2.h}$.

Un des buts de l'invention est d'offrir une solution aux problèmes de confiance entre au moins deux entités d'un réseau.

L'objet de l'invention concerne, notamment, un protocole de négociation distribuée de clés via un mécanisme de répartition redondant et non sensible unitairement d'une valeur publique sensible à l'attaque précitée, cette valeur permettant à chacun des participants à générer un secret commun, sur un ensemble dynamique de chemins de routage dans un réseau cible. Le réseau peut être un réseau ad hoc ou encore un réseau fixe. L'ensemble de chemins de routage peut être fixé au démarrage ou encore évoluer au cours du temps.

L'objet de l'invention concerne un procédé selon la revendication 1.

Le message référence $N_a$, $N_b$ pour les participants A et B est, par exemple, un aléa.

D'autres caractéristiques apparaîtront à la lecture de la description détaillée donnée à titre d'exemple non limitatif qui suit faite en regard de dessins annexés qui représentent :

- la figure 1, un schéma relatif au protocole de Diffie-Hellman,
- la figure 2, un exemple d'attaque de type MIM du protocole Diffie-Hellman,

- la figure 3, un routage Multi-chemin dans le réseau Ad hoc,
- la figure 4, la structure du protocole DHD selon l'invention natif dans un réseau Ad Hoc, et
- la figure 5 la structure du protocole DHD intégré dans la version 6 du protocole ou IP.v6 en option.

Afin de mieux faire comprendre le principe du procédé et du système selon l'invention, l'exemple donné ci-après de manière non limitative est basé sur le mécanisme de décomposition et de recomposition de l'information Diffie-Hellman, et sa répartition sur un réseau ad hoc comprenant plusieurs noeuds Ni reliés entre eux au moyen d'artères de communication, une source A et un destinataire B. Le mécanisme de distribution et de diffusion de la valeur publique de Diffie-Hellman via plusieurs chemins de routage permet de disperser la possibilité d'une attaque sur la communication entre les deux entités au moment de la négociation de la clé qui servira au chiffrement du canal de communication.

Tout autre mécanisme de cryptographie, en dehors du mécanisme de Diffie-Hellman peut être utilisé.

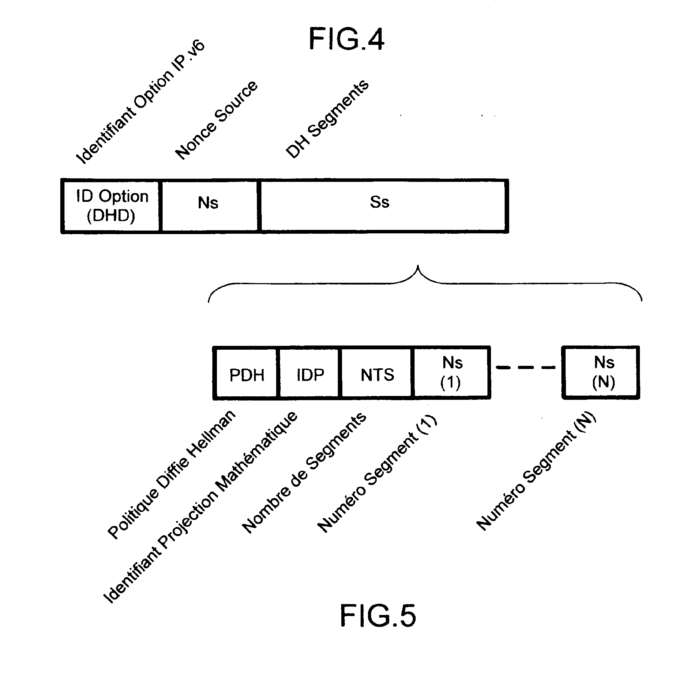

La figure 4 illustre le principe mis en oeuvre par le procédé selon l'invention. L'exemple est donné à titre non limitatif pour le cas d'un réseau ad hoc de forte densité. Cet exemple peut correspondre aux réseaux qu'il existera dans les métropoles dans quelques années. Le réseau pourrait aussi être un réseau fixe comportant un nombre de chemins suffisant pour exécuter les étapes du procédé selon l'invention. Les chemins de routage empruntés par les parties de la valeur publique calculée sont, de préférence, des chemins disjoints, c'est-à-dire qu'ils ne comportent pas de noeuds Ni en commun. Dans le cas où le réseau comprend des chemins pseudo-disjoints, le procédé autorise un pourcentage de noeuds à se croiser. Dans cet exemple, le procédé comporte plusieurs étapes détaillées ci-après :

a) le procédé calcule une valeur publique sensible au MIM prédéfinie de type Diffie-Hellman, par exemple, puis morcelle cette valeur calculée par une exponentiation Diffie-Hellman, par exemple, par une transformée mathématique Mojette dont une description peut être trouvée dans l'article de Jean-Pierre Guédon, séminaire IRCCyN juin 2001 disponible sur le site Internet Jean-Pierre.Guédon@irccyn.ec-nantes.fr, par les deux entités qui échangent de l'information (entité qui émet l'information et entité qui va la recevoir). En lieu et place de la transformée Mojette, il est possible d'utiliser un code Reed-Solomon ou toute type de traitement présentant des fonctions similaires à celles de la fonction Mojette. La valeur publique sert à fabriquer la valeur secrète ou secret partagé par les utilisateurs.

b) l'étape suivante consiste à communiquer sur plusieurs chemins de routage entre les deux entités, une ou plusieurs parties de la valeur publique sensible au MIM sur un chemin donné, et, par exemple, un aléa unique à tous les chemins associés à chacune des entités ; la voie de routage comprenant les chemins et les noeuds empruntés par les différentes portions de la valeur publique est choisie en fonction du type de réseau. Dans le cas d'un réseau proactif, c'est l'émetteur ou source qui choisit le chemin, ce dernier ayant été mémorisé à l'initialisation ou démarrage du système. Dans le cas d'un réseau filaire, les modifications permettant de choisir une route au niveau d'un noeud sont choisies via une étiquette ou label, par exemple MPLS.

c) la troisième étape comporte la synchronisation du secret commun par le calcul inverse Mojette du secret commun via les parties récupérées sur les divers chemins, en utilisant le calcul inverse de la transformation mathématique utilisée lors de la première étape, puis la vérification de ce secret via le chiffrement par le secret commun d'un aléa respectif de chacune des entités, et de la communication de cette donnée chiffrée entre les partenaires. Par exemple, l'émetteur A génère une valeur publique qu'il transmet à une deuxième entité B, afin que ce dernier puisse calculer la valeur du secret commun. La valeur du secret commun est obtenu en mettant en oeuvre la transformée inverse de Mojette, par exemple, de toutes les combinaisons de o segments, o correspondant à la redondance utilisée, et en choisissant pour chacun, A et B, la valeur statistiquement la plus représentée. Cette opération est effectuée pour A et pour B de façon individuelle. Ensuite, A et B vérifient que les deux valeurs trouvées sont identiques. Dans le cas où il y a identité, A et B, utilisent alors cette valeur comme clé de chiffrement. Dans le cas contraire, il peut y avoir soupçon d'une intrusion malveillante dans les communications entre A et B.

La transformée Mojette est une transformée mathématique de Radon discrète qui permet de projeter un ensemble de données d'un espace de dimension N sur un espace de dimension N-1. Cette transformée possède les propriétés nécessaires de « morcellement » et de « sécurité » dans le cadre du protocole. Il est aussi possible d'utiliser la transformée Reed-Solomon en lieu et place de la transformée Mojette. La transformation utilisée dans le procédé selon l'invention présente comme particularité de générer de la redondance. Cette redondance est distribuée sur les segments résultant de la décomposition de la valeur publique sensible en plusieurs parties ou portions. Le choix de la valeur de redondance à utiliser est définie, par exemple, en fonction du nombre de chemins qui peut être attaqué.

De manière détaillée, le procédé distribué de négociation de clés selon l'invention comporte au moins les étapes suivantes :

En considérant, pour mieux fixer les idées, un réseau ad hoc, de taille N, avec deux participants A et B communiquant via k chemins disjoints ou partiellement disjoints (cf. Figure 3). Ces chemins seront choisis dans la base topologique de chacun des deux noeuds communicants A et B, via la mise en oeuvre d'un protocole de découverte de chemin basé sur un mode proactif selon des principes connus de l'Homme du métier et qui ne seront donc pas précisés. Les noeuds intermédiaires jouent le rôle de routeur et transmettent un paquet vers le prochain noeud, ceci en suivant les voies de routage prédéfinies ou définies en temps réel, comme il a été mentionné ci-dessus.

Le protocole distribué de négociation de clés sera alors décrit par les phases suivantes :

• Pour communiquer avec **B, A** génère une valeur publique sensible au MIM selon le protocole DH, par exemple $g^a$, et la décompose en **m** segments de redondance **o** (c-à-d que l'information est recomposable à partir de **o** segments), avec o < **m** : $g^{a1}$ $g^{a2}$ $g^{a3}$ $g^{a4}$ ... $g^{am}$, via la transformée mathématique Mojette **M**, et envoie ces informations concaténées avec un message permettant son identification (plus connu sous le terme Nonce) $N_a$ sur le réseau par les k chemins de routage. Le message transmis $N_a$, donc l'aléa permet notamment à chacune des entités de vérifier la véracité du choix de la valeur statistique du secret commun.

$$g^a \rightarrow M(g^a) = g^{a1}\ g^{a2}\ g^{a3}\ g^{a4}\ \dots\ g^{am}$$

Dans le cas où k=m, on a :

Données chemin 1 : $g^{a1} \parallel N_a$
Données chemin 2 : $g^{a2} \parallel N_a$
....
Données chemin k : $g^{am} \parallel N_a$

Dans le cas où k<m, on peut avoir plusieurs paquets concaténés :

Données chemin 1 : $g^{a1} \parallel g^{ai} \parallel N_a$
Données chemin 2 : $g^{a2} \parallel g^{aj} \parallel N_a$
....
Données chemin k : $g^{am} \parallel g^{al} \parallel N_a$

Dans le cas d'une attaque sur une partie des chemins ou d'une perte en QoS d'une partie des chemins, **B** récupère un certain nombre de segments non modifiés : $g^{ai}\ g^{ai+1}\ ...\ g^{ai+1}$ et récupère j segments modifiés soit par un attaquant, soit par une erreur réseau : $g^{h1}\ g^{h2}\ ...\ g^{hj}$, avec **j+l** < **m.**

• De même, pour communiquer avec **A, B** génère une valeur publique sensible au MIM selon le protocole de Diffie-Hellman DH $g^b$, et la décompose en **m** segments de redondance **o** (c-a-d que l'information est recomposable à partir de **o** segments), avec **o < m** : $g^{b1}$ $g^{b2}$ $g^{b3}$ $g^{b4}$ ⋯ $g^{bm}$, via la transformée mathématique Mojette **M,** et envoie ces informations concaténées avec un message $N_b$ permettant son identification (connu sous le terme Nonce) sur le réseau par les k chemins de routage. Le message transmis $N_b$, donc l'aléa permet notamment à chacune des entités de vérifier la véracité du choix de la valeur statistique du secret commun $g^{ab~}$ et $g^{~ab}$ calculé par chacune des entités, via le chiffrement du message ou Nonce pair par le secret commun et sa vérification par le pair après déchiffrement.

$$g^b \rightarrow M(g^b) = g^{b1}\ g^{b2}\ g^{b3}\ g^{b4}\ \dots\ g^{bm}$$

De même dans le cas d'une attaque sur une partie des chemins ou d'une perte en QoS d'une partie des chemins, **A** récupère un certain nombre de segments non modifié : $g^{bi}\ g^{bi+1}\ \cdots\ g^{bi+l}$ et récupère j segments modifiés soit par un attaquant, soit par une erreur réseau : $g^{f1}\ g^{f2}\ \cdots\ g^{fj}$, avec **j+l** < m.

- Les deux participants **A** et **B** vont alors régénérer le secret commun en recalculant la transformée de Mojette inverse de toutes les combinaisons de **o** segments et en choisissant la valeur statistiquement la plus représentée : $g^{ab~}$ et $g^{~ab}$ (dans le cas pratique, un trigger devra être positionné afin de raccourcir le temps de calcul).

Dans le cas du participant A, le calcul mis en oeuvre est le suivant :

$g^{ab~} \rightarrow max(M^{-1}(g^{yi}\ g^{yi+1}\ g^{yi+2}\ ...\ g^{y+o}))$, avec $g^{yi}$ appartenant à $[g^{bi}, g^{fi}]$.

Dans le cas du participant B, le calcul mis en oeuvre est le suivant :

$g^{~ab} \rightarrow max(M^{-1}(g^{yi}\ g^{yi+1}\ g^{yi+2}\ \cdots\ g^{y+o}))$, avec $g^{yi}$ appartenant à $[g^{ai}, g^{hi}]$.

- Une fois calculé les deux secrets supposés communs, $g^{ab~}$ pour **A,** et et $g^{~ab}$ pour **B,** le participant A envoie un message de vérification correspondant au Nonce $N_b$ de **B** chiffré avec la clé générée via le secret commun : $g^{ab~}$ et l'envoie vers le participant **B : {$N_b$} $g^{ab~}$. B** déchiffre alors le message de **A** avec sa clé $g^{~ab}$ et vérifie la cohérence avec son Nonce $N_b$, puis renvoie vers le message d'acquittement de la même manière : **{$N_a$} $g^{~ab}$** pour validation de la négociation de la clé commune entre les deux entités.

Ce principe permet de résister à plusieurs attaques de type MIM « Men in The Middle », avec mise en oeuvre d'une décision (représentativité d'une donnée vis à vis du nombre total de combinaisons) afin de retenir la valeur la plus cohérente $g^x$.

De même, ce principe permet de valider l'intégrité des données $g^x$ de la communication. En effet, si toutes les combinaisons possibles de o segments donnent le même résultat, nous pouvons conclure qu'il n'y a pas eu modification intentionnelle ou non de la communication.

**Format du protocole Diffie-Hellman Distribué**

Dans le cadre de l'exemple donné pour un réseau ad hoc, le protocole distribué de négociation de clés est, par exemple, mis en oeuvre en l'intégrant de manière représentative (Identifiant DHD) tel qu'il est schématisé à la figure 4, dans la donnée du format du protocole Ad hoc.
Identifiant Trame : **IDO,**
Référence ou Nonce de la source : $N_s$,
Un segment ou une partie concaténée des segments : $S_s$,
Chacun des segments sera représenté par :

Identification de la Politique : DH (elliptique, polynomiale,...)
Identifiant de la projection : IDP,
Numéro de segments : NS,
Données du segment : DS, suivant le procédé DH.

Dans le cadre d'une application à un réseau IPv6, où le protocole distribué de négociation de clés est vue en tant qu'option IPv6, tel qu'il est représenté à la figure 5, le procédé inclut les champs suivants :

Identifiant Option : **IDO,**

Référence ou Nonce de la source : $N_s$,

Un segment ou une partie concaténée des segments : $S_s$,

Chacun des segments sera représenté par :

Identification de la Politique DH (elliptique, polynomiale,...) : PDH
Identifiant de la projection : IDP,
Nombre de segments : NTS,
Numéro de segments : NS,
Données du segment : DS sur x octets, suivant le procédé DH.

Le procédé et le système selon l'invention offrent notamment les avantages suivants :

Le procédé utilise plusieurs chemins de distribution en décomposant l'information entre les deux participants afin de ne communiquer qu'une partie de la valeur publique à chacun de ses voisins ; si un ou plusieurs attaquants tentent de modifier la valeur DH de chacun des participants finaux, il ne pourra qu'en modifier un certain pourcentage, qui est d'autant plus faible que le nombre de décompositions est important.

Il n'est pas nécessaire que les utilisateurs disposent de clés pré-partagées ou de certificats via un moyen organisationnel hors communication.

Le système composé par les deux entités se suffit à lui-même, et permet de créer un canal sécurisé en utilisant la distribution d'éléments redondants et non sensibles unitairement.

Le système est autonome et ne dispose pas, en fonctionnement normal, de centre de gestion de clés, avantage dans un réseau ad hoc où la gestion des clés est un problème non résolu actuellement par l'art antérieur.

Le protocole selon l'invention ne nécessite pas de clés ou de certificats prépartagés entre les deux entités. Chaque entité doit pouvoir recalculer le secret commun à partir d'un ensemble redondant de parties du secret original et vérifie la cohérence de ce secret entre les deux entités.

Sans sortir du cadre de l'invention, le procédé et le système selon l'invention peuvent être mise en oeuvre sur des équipements ou des solutions de sécurité permettant un minimum de configuration pour l'utilisateur, et notamment, dans le calcul et le partage du secret pré partagé. Dans ce cadre, il est possible de l'utiliser dans les systèmes du marché civil, tels que les téléphones VoIP, les terminaux mobiles, mais aussi les équipements radio tactiques qui doivent utiliser un réseau ad hoc dans le cadre de déploiement localisé et qui ont un besoin de sécurisation d'une communication sur une période temporelle courte donnée.

## Revendications

1. Procédé permettant de distribuer des éléments pour générer une ou plusieurs clés cryptographiques entre au moins deux utilisateurs A et B dans un réseau comprenant plusieurs noeuds Ni reliés entre eux au moyen d'artères de communication, le réseau mettant en oeuvre un protocole de routage, le procédé comportant au moins les étapes suivantes:

   • pour communiquer avec B, A génère une première valeur publique sensible à une attaque malveillante où un tiers cherche à se faire passer pour B auprès de A et pour A auprès de B, attaque dite « MIM » ou «Men In the Middle» et la décompose, en utilisant une transformation mathématique, en m premiers segments de redondance o, avec o<m, la première valeur publique étant recomposable à partir de o segments, et transmet vers B ces m premiers segments concaténés avec un premier message référence $N_a$ sur le réseau par k chemins de routage,
   • pour communiquer avec A, B génère une seconde valeur publique sensible à une attaque «MIM» et la décompose, en utilisant la transformation mathématique, en m seconds segments de redondance o, la seconde valeur publique étant recomposable à partir de o segments, et transmet vers A ces m seconds segments concaténés avec un second message référence $N_b$ sur le réseau par les k chemins de routage,
   • chacun des deux utilisateurs A et B régénère un secret en recalculant la transformation mathématique inverse de toutes les combinaisons de o segments parmi ceux des segments de redondance o qu'il a récupérés, et en en choisissant la valeur statistiquement la plus représentée, $g^{ab\sim}$ pour A, et et $g^{\sim ab}$ pour B,
   • une fois calculés les deux secrets, $g^{ab\sim}$ pour A et et $g^{\sim ab}$ pour B, supposés identiques et constituant une clé cryptographique commune entre A et B, A envoie vers B un message de vérification { Nb } $g^{ab\sim}$, correspondant au second message référence $N_b$ de B chiffré avec le secret $g^{ab\sim}$ ,
   • B déchiffre alors le message de vérification de A avec le secret $g^{\sim ab}$ et en vérifie la cohérence avec le second message référence $N_b$, puis renvoie vers A un message d'acquittement {$N_a$} $g^{\sim ab}$, correspondant au premier message référence $N_a$ chiffré avec le secret $g^{\sim ab}$, pour validation de la clé cryptographique commune entre les deux utilisateurs, et utilisation de la clé cryptographique commune pour coder un message.

2. Procédé selon la revendication 1 dans lequel le message référence $N_a$, $N_b$ pour les participants A et B est un aléa.

3. Procédé selon la revendication 1 dans lequel la transformée mathématique est la transformée de Mojette.

4. Procédé selon la revendication 1 dans lequel l'on utilise le protocole Diffie-Hellman pour générer la valeur publique sensible au MIM.

5. Procédé selon la revendication 1 dans lequel l'on utilise la transformée Reed-Solomon pour décomposer la valeur publique sensible au MIM.

6. Procédé selon la revendication 1 dans lequel l'étape de régénération du secret commun comporte les étapes suivantes :

   dans le cas du participant A, on effectue le calcul suivant :

**gab~** → max(**M⁻¹** (g^yi g^{yi+1} g^{yi+2} ... g^{y+o})), avec **g^yi** appartenant à [**g^bi**, **g^fi**].

dans le cas du participant B, on effectue le calcul suivant :

**g~ab** → max(**M⁻¹** (g^yi g^{yi+1} g^{yi+2} ⋯ g^{y+o})), avec **g^yi** appartenant à [**g^ai**, **g^hi**].

7. Procédé selon la revendication 1 dans lequel le réseau est un réseau ad hoc.

8. Procédé selon l'une des revendications 1 ou 7 dans lequel le protocole de routage est un protocole proactif.

**Claims**

1. A method for distributing elements for generating one or more cryptographic keys between at least two users A and B in a network comprising a plurality of nodes Ni linked together by means of communication paths, the network implementing a routing protocol, the method comprising at least the following steps:

   • to communicate with B, A generates a first public value that is sensitive to a malicious attack where a third party pretends to be B towards A and A towards B, which attack is referred to as "MIM" or "Men In the Middle", and decomposes said value using a mathematical transformation into m first segments with a redundancy o, with o<m, which first public value can be recomposed from o segments, and sends these m first concatenated segments to B with a first reference message $N_a$ over the network via k routing paths;
   • to communicate with A, B generates a second public value that is sensitive to an "MIM" attack and decomposes said value using the mathematical transformation into m second segments with a redundancy o, the second public value can be recomposed from o segments, and sends these m second concatenated segments to A with a second reference message $N_b$ over the network via the k routing paths;
   • each of the two users A and B regenerates a secret by recalculating the inverse mathematical transformation of all of the combinations of o segments from the segments with redundancy o that they have gathered, and by selecting the value that is statistically the most represented, g^{ab~} for A and g^{~ab} for B;
   • once the two secrets have been calculated, g^{ab~} for A and g^{~ab} for B, which are presumed to be identical and which constitute a cryptographic key that is shared between A and B, A sends a verification message {$N_b$} g^{ab~} to B that corresponds to the second reference message $N_b$ of B encrypted with the secret g^{ab~},
• B then decrypts the verification message of A with the secret g^{~ab} and verifies the coherence with the second reference message $N_b$, then sends an acknowledgement message {$N_a$} g^{~ab} to A that corresponds to the first reference message $N_a$ encrypted with the secret g^{~ab} for the validation of the cryptographic key that is shared between the two users, and uses the shared cryptographic key to encode a message.

2. The method according to claim 1, wherein the message reference $N_a$, $N_b$ for the participants A and B is a random variable.

3. The method according to claim 1, wherein the mathematical transformation is the Mojette transform.

4. The method according to claim 1, wherein the Diffie-Hellman protocol is used to generate the public value that is sensitive to MIM.

5. The method according to claim 1, wherein the Reed-Solomon transform is used for decomposing the public value that is sensitive to MIM.

6. The method according to claim 1, wherein the step of regenerating the shared secret comprises the following steps:

   performing the following calculation for participant A:

   g^{ab~} →max(*M⁻¹* (g^yi g^{yi+1} g^{yi+2} ⋯ g^{y+0}), with g^yi belonging to [g^bi, g^fi];

   performing the following calculation for participant B:

   g^{~ab} → max(*M⁻¹* (g^yi g^{yi+1} g^{yi+2} ... g^{y+0}), with g^yi belonging to [g^ai, g^hi].

7. The method according to claim 1, wherein the network is an ad hoc network.

8. The method according to claim 1 or 7, wherein the routing protocol is a proactive protocol.

**Patentansprüche**

1. Verfahren zum Verteilen von Elementen zum Erzeugen von einem oder mehreren kryptografischen Schlüsseln zwischen wenigstens zwei Benutzern A und B in einem Netzwerk, das mehrere Knoten Ni beinhaltet, die über Kommunikationspfade untereinander verbunden sind, wobei das Netzwerk ein Routing-Protokoll implementiert, wobei das Verfahren wenigstens die folgenden Schritte beinhaltet:

• A erzeugt, zum Kommunizieren mit B, einen ersten öffentlichen Wert, der für bösartige Angriffe empfindlich ist, bei denen eine Fremdpartei sich gegenüber A als B und gegenüber B als A ausgibt, wobei ein solcher Angriff als "MIM" oder "Men In the Middle" bezeichnet wird, und zerlegt den Wert mittels einer mathematischen Transformation in m erste Segmente mit Redundanz o, wobei o<m ist, wobei der erste öffentliche Wert wieder aus o Segmenten zusammengesetzt werden kann, und sendet diese m ersten verketteten Segmente zu B mit einer ersten Referenznachricht $N_a$ über das Netzwerk über k Routing-Pfade;

• B erzeugt, zum Kommunizieren mit A, einen zweiten öffentlichen Wert, der für einen "MIM"-Angriff empfindlich ist, und zerlegt den Wert mittels der mathematischen Transformation in m zweite Segmente mit Redundanz o, wobei der zweite öffentliche Wert wieder aus o Segmenten zusammengesetzt werden kann, und sendet diese m zweiten verketteten Segmente zu A mit einer zweiten Referenznachricht $N_b$ über das Netzwerk über die k Routing-Pfade;

• die beiden Benutzer A und B regenerieren jeweils ein Geheimnis durch Neuberechnen der umgekehrten mathematischen Transformation aller Kombinationen von o Segmenten unter den Segmenten mit Redundanz o, die gesammelt wurden, und durch Auswählen des Wertes, der statistisch am meisten repräsentiert ist, $g^{ab~}$ für A und $g^{~ab}$ für B;

• A sendet zu B, nach dem Berechnen der beiden Geheimnisse, $g^{ab~}$ für A und $g^{~ab}$ für B, die als identisch angenommen werden und einen A und B gemeinsamen kryptografischen Schlüssel bilden, eine Verifizierungsnachricht $\{N_b\}$ $g^{ab~}$, die der mit dem Geheimnis $g^{ab~}$ verschlüsselten zweiten Referenznachricht $N_b$ von B entspricht,

• B entschlüsselt die Verifizierungsnachricht von A mit dem Geheimnis $g^{~ab}$ und verifiziert deren Übereinstimmung mit der zweiten Referenznachricht $N_b$ und sendet dann zu A eine Bestätigungsnachricht $\{N_a\}$ $g^{~ab}$ zurück, die der mit dem Geheimnis $g^{~ab}$ verschlüsselten Referenznachricht $N_a$ entspricht, zur Validierung des den beiden Benutzern gemeinsamen kryptografischen Schlüssels und zum Benutzen des gemeinsamen kryptografischen Schlüssels zum Codieren einer Nachricht.

2. Verfahren nach Anspruch 1, wobei die Referenznachricht $N_a$, $N_b$ für die Teilnehmer A und B eine Zufallsvariable ist.

3. Verfahren nach Anspruch 1, wobei die mathematische Transformierte die Mojette-Transformierte ist.

4. Verfahren nach Anspruch 1, wobei das Diffie-Hellman-Protokoll zum Erzeugen des öffentlichen Schlüssels verwendet wird, der für MIM empfindlich ist.

5. Verfahren nach Anspruch 1, wobei die Reed-Solomon-Transformierte zum Zerlegen des öffentlichen Schlüssels verwendet wird, der für MIM empfindlich ist.

6. Verfahren nach Anspruch 1, wobei der Schritt des Regenerierens des gemeinsamen Geheimnisses die folgenden Schritte beinhaltet:

Ausführen der folgenden Berechnung für Teilnehmer A:

$g^{ab~} \rightarrow \max(M^{-1} (g^{yi} g^{yi+1} g^{yi+2} \dots g^{y+0})$, wobei $g^{yi}$ zu $[g^{bi}, g^{fi}]$ gehört;

Ausführen der folgenden Berechnung für Teilnehmer B:

$g^{~ab} \rightarrow \max(M^{-1} (g^{yi} g^{yi+1} g^{yi+2} \dots g^{y+0})$, wobei $g^{yi}$ zu $[g^{ai}, g^{hi}]$ gehört.

7. Verfahren nach Anspruch 1, wobei das Netzwerk ein Ad-Hoc-Netzwerk ist.

8. Verfahren nach einem der Ansprüche 1 bis 7, wobei das Routing-Protokoll ein proaktives Protokoll ist.

$U_1$
$x_1 \in_R [0, q-1]$ $\xrightarrow{\quad g^{x_1} \quad}$ $U_2$
$x_2 \in_R [0, q-1]$

$K_1 := (g^{x_2})^{x_1} \xleftarrow{\quad g^{x_2} \quad}$ $K_2 := (g^{x_1})^{x_2}$

## FIG.1

$U_1$
$x_1 \in_R [0, q-1]$ $\xrightarrow{\quad g^{x_1} \quad}$ $\xrightarrow{\quad g^{h} \quad}$ $U_2$
$x_2 \in_R [0, q-1]$

$H$
$h \in_R [0, q-1]$

$K_1 := (g^{h})^{x_1} \xleftarrow{\quad g^{h} \quad}$ $\xleftarrow{\quad g^{x_2} \quad}$ $K_2 := (g^{h})^{x_2}$

## FIG.2

## FIG.3

# FIG.4

Identifiant Option IP.v6

Nonce Source

DH Segments

| ID Option (DHD) | Ns | Ss |
|---|---|---|

| PDH | IDP | NTS | Ns (1) | - - - - | Ns (N) |
|---|---|---|---|---|---|

Politique Diffie Hellman

Identifiant Projection Mathématique

Nombre de Segments

Numéro Segment (1)

Numéro Segment (N)

# FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 2006071239 A

**Littérature non-brevet citée dans la description**

• **W.DIFFIE-M.E.HELLMAN.** New Directions in cryptography. *IEEE Trans. on Information Theory,* Novembre 1976, vol. IT-22-6